# EUROPÄISCHE PATENTSCHRIFT

(11) **EP 1 426 232 B1**
(45) Veröffentlichungstag und Bekanntmachung des Hinweises auf die Patenterteilung: **31.05.2006**
(21) Anmeldenummer: 03450263.3
(22) Anmeldetag: 27.11.2003
(51) Int. Cl.: B60N 2/58, B61B 12/00, A47C 31/02

(54) **Sessel mit lösbar befestigten Auflagen, insbesondere für einen Sessellift.**
Chair with releasably attached covers, especially for a ski lift.
Siège comportant des coussins fixés de façon amovible, notamment pour un télésiêge.

(30) Priorität: 04.12.2002 AT 18162002
(43) Veröffentlichungstag der Anmeldung: 09.06.2004
(73) Patentinhaber: Innova Patent GmbH, 6960 Wolfurt (AT)
(72) Erfinder: Switzeny, Kurt c/o contaxx GmbH, 6440 Brunnen (CH)
(74) Vertreter: Hehenberger, Reinhard

(56) Entgegenhaltungen:
- CH-A- 664 739
- FR-A- 2 814 709
- US-A- 3 037 814
- US-A- 4 457 524

## Beschreibung

Die Erfindung betrifft einen Sessel, insbesondere von Sesselliften, mit einem Rahmen und am Rahmen befestigten Auflagen, mit einem elastischen Verbindungselement, das zur Verbindung der Auflagen mit dem Rahmen an den Auflagen befestigt ist, wobei am Rahmen eine Vertiefung vorgesehen ist, in die das Verbindungselement einsetzbar und in dieser auf einer Seite der Vertiefung mittels einer Rastanordnung festlegbar ist.

Aus der US-A-3037814 ist ein Sessel und aus der CH-A-664739 ist ein Fahrzeugsitz bekannt, bei denen an Auflagen elastische Elemente bzw. Zapfen vorgesehen sind, mit denen die Auflagen an Rahmen befestigt werden können. Dazu sind an den Rahmen Vertiefungen vorgesehen, in welche die Verbindungselemente einsetzbar und darin mittels einer Rastanordnung festlegbar sind.

Es ist auch bekannt, die Auflagen von Sesselliftsesseln mit dem Rahmen zu vernieten, zu verschrauben oder zu verkleben. Dies hat jedoch den Nachteil, dass mechanische Arbeiten, wie das Bohren von Löchern und dgl., notwendig sind und die Verbindungen bei einem Austausch der Auflagen häufig auch nicht ohne weiteres wieder gelöst werden können.

Der Erfindung liegt daher die Aufgabe zu Grunde, eine Möglichkeit anzugeben, die Auflagen auf einem Rahmen von Sesseln, insbesondere von Sesselliften, einfach und dauerhaft zu befestigen, wobei aber ein späteres Lösen dieser Verbindung ohne Probleme möglich sein soll.

Gelöst wird diese Aufgabe mit einem Sessel mit den Merkmalen des Anspruches 1.

Beim erfindungsgemäßen Sessel werden die Auflagen über eine Rastverbindung mit dem Rahmen verbunden, sodass ein sehr einfaches Befestigen der Auflagen am Rahmen möglich ist. Damit die Rastverbindung wieder gelöst werden kann, ist des weiteren ein elastisches Element vorgesehen, das auf der der Rastanordnung gegenüberliegenden Seite angeordnet ist und das deformiert werden kann, um die Rastverbindung zu lösen.

Bevorzugte Ausführungsformen der Erfindung sind Gegenstand der Unteransprüche.

Weitere Merkmale und Vorteile der Erfindung ergeben sich aus der nachfolgenden Beschreibung eines Ausführungsbeispieles der Erfindung unter Bezugnahme auf die Zeichnungen.

Es zeigt:
Fig. 1 den Sessel eines Sesselliftes im Schrägriss;
Fig. 2 ein Detail des Sessels von Fig. 1 im Bereich einer Verbindung einer Auflage mit einem Rahmen in vergrößertem Maßstab;
die Fig. 3a, 3b und 3c das Detail von Fig. 2 in einem weiter vergrößertem Maßstab in den einzelnen Phasen des Verbindens einer Auflage mit dem Rahmen; und
Fig. 4 das selbe Detail im Moment des Lösens der Verbindung bei der Demontage.

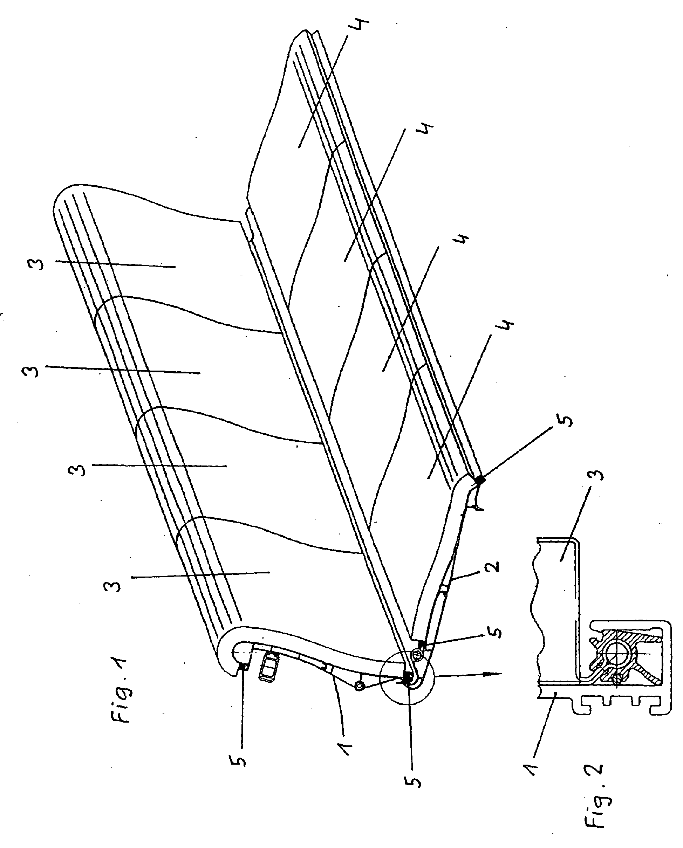

In Fig. 1 ist ein Sessel eines Sesselliftes dargestellt, der aus einem Rahmen mit zwei Rahmenteilen 1 und 2 besteht. Der Rahmenteil 1 ist eine Rahmenkonstruktion für die Rückenlehne, auf der vier Auflagen 3 befestigt sind. Der Rahmenteil 2 ist die Rahmenkonstruktion für die Sitzfläche, auf der ebenfalls vier Auflagen 4 befestigt sind. Die Auflagen 3 und 4 sind über jeweils zwei Verbindungselemente 5 mit den Rahmenteilen 1 und 2 verbunden, wie sie in den Fig. 2 bis 4 im Detail dargestellt sind.

Wie die Fig. 2 bis 4 zeigen, besteht die am Beispiel der unteren Verbindung der Auflagen 3 dargestellte Verbindung mit dem Rahmenteil 1 im wesentlichen aus einem Verbindungselement 5, das in eine nutenförmige Vertiefung 6 am Rahmenteil 1 eingesteckt und dort verrastet werden kann. Die nutenförmige Vertiefung wird durch ein im wesentlichen U-förmiges Profil 8 gebildet, das zwei Schenkel 7, 8 und eine Basis 9 aufweist. Im Bereich des freien Randes des einen Schenkels 7 ist ein nach innen weisender, hakenförmiger Vorsprung 10 angeordnet. Das Verbindungselement 5 weist einen Ansatz 11 auf, der im verrasteten Zustand des Verbindungsteiles 5 am hakenförmigen Vorsprung 10 einrastet und somit ein unbeabsichtigtes Herausziehen des Verbindungsteiles 5 aus der Nut 6 verhindert. An der dem Ansatz 11 gegenüberliegenden Seite weist das Verbindungselement 5 eine Nut 12 auf, in die ein elastisches Element 13 in Form einer Schnur eingelegt ist, die über die Nut hinausragt und z.B. aus Gummi bestehen kann. Auf der der Basis 9 zugewandten Seite weist das Verbindungselement 5 zwei Stege 14 und 15 auf, die für eine exakte Positionierung bzw. Festlegung des Verbindungselementes 5 in der Nut 6 sorgen.

Das Verbindungselement 5 weist eine zentrale Nut 16 auf, in der ein Verbindungsbügel 17 aufgenommen ist, der die Verbindung zur Auflage 3 bzw. 4 herstellt. Der Verbindungsbügel 17 weist an seinen in der zentralen Nut 16 aufgenommenen Ende 18 eine Verdickung auf, die verhindert, dass der Verbindungsbügel 17 aus dem Verbindungselement 5, insbesondere im eingebauten Zustand des Verbindungselementes 5, herausgezogen wird.

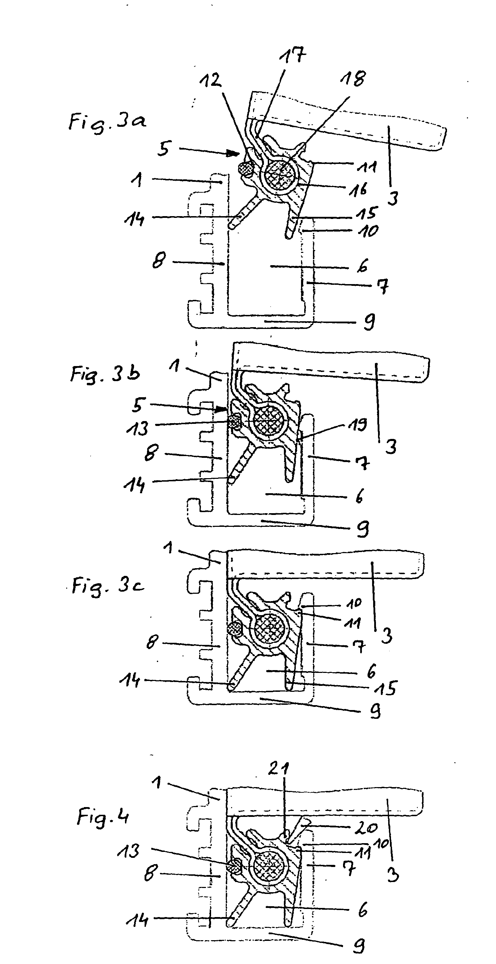

Wie die Fig. 3a, 3b und 3c zeigen, wird das Verbindungselement beim Einbau zunächst mit den Stegen 14, 15 in die Nut 6 eingesetzt. Der Steg 14 gleitet dann an der Wand 8 des U-förmigen Profiles in das Innere der Nut, bis das elastische Element 13 ebenfalls in Anlage an die Wand 8 kommt. Gleichzeitig kommt die gegenüberliegende Fläche 19 des Verbindungselementes 15 in Anlage an den Vorsprung 10. Durch noch tieferes Hineindrücken des Verbindungselementes 5 in die Nut 6 wird anschließend das elastische Element 13 zusammengedrückt und ggf. die Wand 7 etwas nach außen gedrückt, bis die Stege 14 und 15 die Basis 9 der Nut 6 erreicht haben. In diesem Moment hintergreift der Ansatz 11 den Vorsprung 10, womit das Verbindungselement 5 in der Nut 6 eingerastet ist. Durch das elastische Element 13 wird der Ansatz 11 fest hinter den hakenartigen Vorsprung 10 gedrückt, sodass ein unbeabsichtigtes Herausziehen des Verbindungselementes 5 aus der Nut 6 verhindert wird.

Damit des weiteren verhindert wird, dass das Verbindungselement 5 durch starkes Anziehen an einer Auflage 3 aus der Nut 6 "herausgedreht" wird, obwohl die Rastverbindung 10, 11 zunächst erhalten bleibt, ist der Steg 14 vorgesehen, der mit seiner Spitze in einer Ecke der Basis der Nut 6 festgelegt ist.

Zum Lösen der Rastverbindung kann, wie in Fig. 4 gezeigt ist, mit einem Werkzeug 20, z.B. einem Schraubenzieher, an einer Lippe 21 angesetzt werden, um durch Verdrehen des Werkzeuges 20 im Uhrzeigersinn den Ansatz 11 hinter dem hakenartigen Vorsprung 10 herauszuheben, worauf das Verbindungselement 5 aus der Nut 6 herausgezogen werden kann. Dieses Herausdrücken des Ansatzes 11 hinter dem Vorsprung 10 wird durch das elastische Element 13 ermöglicht, das in dieser Phase soweit zusammengedrückt werden kann, dass die Rastverbindung 10, 11 gelöst wird.

## Patentansprüche

1. Sessel, insbesondere von Sesselliften, mit einem Rahmen (1, 2) und am Rahmen (1, 2) befestigten Auflagen (3, 4),mit einem elastischen Verbindungselement (5), das zur Verbindung der Auflagen (3, 4) mit dem Rahmen (1, 2) an den Auflagen (3, 4) befestigt ist, wobei am Rahmen (1, 2) eine Vertiefung (6) vorgesehen ist, in die das Verbindungselement (5) einsetzbar und in dieser auf einer Seite der Vertiefung (6) mittels einer Rastanordnung (10, 11) festlegbar ist, **dadurch gekennzeichnet, dass** das Verbindungselement (5) auf der der Rastanordnung (10, 11) gegenüberliegenden Seite ein elastisches Element (13) aufweist, das im in der Vertiefung (6) eingesetzten Zustand des Verbindungselementes (5) eine Vorspannkraft erzeugt, welche die Rastanordnung (10, 11) in die Schließstellung drückt dass die Vertiefung (6) nutenförmig ausgeführt ist und dass das elastische Element (13) ein elastisches, gegebenenfalls profiliertes Band oder eine elastische Schnur, z.B. aus Gummi, ist.

2. Sessel nach Anspruch 1, **dadurch gekennzeichnet, dass** die Rastanordnung (10, 11) einen hakenartigen Vorsprung (10) auf der Innenseite der nutenförmigen Vertiefung (6) aufweist, dem ein Ansatz (11) am Verbindungselement (5) zugeordnet ist.

3. Sessel nach Anspruch 2, **dadurch gekennzeichnet, dass** das Verbindungselement (5) neben dem Ansatz (11) eine Lippe (21) aufweist, die sich in eingebautem Zustand des Verbindungselementes (5) in den Bereich der Mündung der nutenförmigen Vertiefung (6) erstreckt.

4. Sessel nach einem der Ansprüche 1 bis 3, **dadurch gekennzeichnet, dass** das elastische Element (13) in einer Nut (12) im Verbindungselement (5) aufgenommen ist.

5. Sessel nach einem der Ansprüche 1 bis 4, **dadurch gekennzeichnet, dass** das Verbindungselement (5) einen Steg (14) aufweist, der sich im in der Vertiefung (6) eingesetzten Zustand des Verbindungselementes (5) in einer Ecke an der Basis (9) der nutenförmigen Vertiefung (6) abstützt.

6. Sessel nach Anspruch 5, **dadurch gekennzeichnet, dass** das Verbindungselement (5) einen zweiten Steg (15) aufweist, der sich im in der Vertiefung (6) eingesetzten Zustand des verbindungselementes (5) im Bereich der zweiten Ecke an der Basis (9) der nutenförmigen Vertiefung (6) abstützt.

7. Sessel nach einem der Ansprüche 1 bis 6, **dadurch gekennzeichnet, dass** das Verbindungselement (5) eine zentrale Nut (16) aufweist, in der ein Verbindungsbügel (17) aufgenommen ist, der an der Auflage (3, 4) angeordnet ist.

8. Sessel nach Anspruch 7, **dadurch gekennzeichnet, dass** der Verbindungsbügel (17) an seinem in der zentralen Nut (16) aufgenommenen Ende ein Verdickung (18) aufweist.

9. Sessel nach Anspruch 7 oder 8, **dadurch gekennzeichnet, dass** die Nut (16) zu der Seite, auf der das elastische Element (13) angebracht ist, hin offen ist.

## Claims

1. Chair, in particular for chair lifts, with a frame (1, 2) and coverings (3, 4) fastened to the frame (1, 2), with an elastic connecting element (5), which is fastened to the coverings (3, 4) to connect the coverings (3, 4) to the frame (1, 2), wherein a depression (6) is provided on the frame (1, 2), into which depression the connecting element (5) can be inserted and can be fixed in this on one side of the depression (6) by means of a catch arrangement (10, 11), **characterised in that** on the side opposite the catch arrangement (10, 11) the connecting element (5) has an elastic element (13), which when the connecting element (5) is inserted in the depression (6), generates a prestressing force, which presses the catch arrangement (10, 11) into the closed position, that the depression (6) is configured in the form of a groove, and that the elastic element (13) is an elastic, possibly profiled, band or an elastic cord, e.g. made of rubber.

2. Chair according to Claim 1, **characterised in that** the catch arrangement (10, 11) has a hook-like projection (10) on the inside of the groove-shaped depression (6), with which is associated a lug (11) on the connecting element (5).

3. Chair according to Claim 2, **characterised in that** beside the lug (11) the connecting element (5) has a lip (21), which when the connecting element (5) is in installed state, extends into the region of the mouth of the groove-shaped depression (6).

4. Chair according to one of Claims 1 to 3, **characterised in that** the elastic element (13) is received in a groove (12) in the connecting element (5).

5. Chair according to one of Claims I to 4, **characterised in that** the connecting element (5) has a leg (14), which when the connecting element (5) is in installed state in the depression (6), is supported on the base (9) of the groove-shaped depression (6) in one corner.

6. Chair according to Claim 5, **characterised in that** the connecting element (5) has a second leg (15), which when the connecting element (5) is in installed state in the depression (6), is supported against the base (9) of the groove-shaped depression (6) in the region of the second corner.

7. Chair according to one of Claims 1 to 6, **characterised in that** the connecting element (5) has a central groove (16), in which a connection clamp (17) arranged on the covering (3, 4) is received.

8. Chair according to Claim 7, **characterised in that** the connection clamp (17) has a thickened portion (18) on its end received in the central groove (16).

9. Chair according to Claim 7 or 8, **characterised in that** the groove (16) is open to the side, on which the elastic element (13) is attached.

## Revendications

1. Siège, en particulier de télésièges, comprenant un cadre (1,2) et des supports (3, 4) fixés sur le cadre, avec un élément de liaison élastique (5), qui pour la liaison des supports (3, 4) avec le cadre (1, 2) est fixé aux supports (3, 4), dans lequel est prévue sur le cadre (1, 2) une cavité (6), dans laquelle l'élément de liaison (5) peut être logé et être fixé sur un côté de la cavité (6) à l'aide d'un dispositif d'arrêt (10, 11), **caractérisé en ce que** l'élément de liaison (5) sur le côté opposé au dispositif d'arrêt (10, 11) présente un élément élastique (13) qui dans l'état logé dans la cavité (6) de l'élément de liaison (5) produit une force de précontrainte, laquelle presse le dispositif d'arrêt (10, 11) dans la position de fermeture, **en ce que** la cavité (6) est réalisée en forme de rainure et **en ce que** l'élément élastique (13) est une bande élastique, le cas échéant profilée ou un cordon élastique, par exemple, en caoutchouc.

2. Siège selon la revendication 1, **caractérisé en ce que** le dispositif d'arrêt (10, 11) présente une saillie de type crochet (10) sur le côté intérieur de la cavité en forme de rainure (6), à laquelle est associé un épaulement (11) sur l'élément de liaison (5).

3. Siège selon la revendication 2, **caractérisé en ce que** l'élément de liaison (5) présente près de l'épaulement (11) une lèvre (21) qui s'étend dans l'état monté de l'élément de liaison (5) dans la zone de l'ouverture de la cavité en forme de rainure (6).

4. Siège selon l'une des revendications 1 à 3, **caractérisé en ce que** l'élément élastique (13) est logé dans une rainure (12) située dans l'élément de liaison (5).

5. Siège selon l'une des revendications 1 à 4, **caractérisé en ce que** l'élément de liaison (5) présente une barrette (14) qui s'appuie, dans l'état logé dans la cavité (6) de l'élément de liaison (5), dans un angle sur la base (9) de la cavité en forme de rainure (6).

6. Siège selon la revendication 5, **caractérisé en ce que** l'élément de liaison (5) présente une deuxième barrette (15) qui s'appuie, dans l'état logé dans la cavité (6) de l'élément de liaison (5), dans la zone du deuxième angle sur la base (9) de la cavité en forme de rainure (6).

7. Siège selon l'une des revendications 1 à 6, **caractérisé en ce que** l'élément de liaison (5) présente une rainure centrale (16) dans laquelle est logé un étrier de jonction (17) qui est disposé sur le support (3, 4).

8. Siège selon la revendication 7, **caractérisé en ce que** l'étrier de jonction (17) présente à son extrémité logée dans la rainure centrale (16) un épaississement (18).

9. Siège selon la revendication 7 ou 8, **caractérisé en ce que** la rainure (16) est ouverte vers le côté sur lequel est agencé l'élément élastique (13).
